# EUROPÄISCHE PATENTANMELDUNG

(11) **EP 3 290 397 A1**
(43) Veröffentlichungstag der Anmeldung: **07.03.2018**
(21) Anmeldenummer: 17001213.2
(22) Anmeldetag: 17.07.2017
(51) Int. Cl.: C03B 9/193

(54) **PLUNGERMECHANISMUS FÜR EINE ZUMINDEST EINE VORFORM AUFWEISENDE GLASFORMMASCHINE**

(30) Priorität: 31.08.2016 DE 202016005286 U
(71) Anmelder: Rolf Themann & Partner SA, 1273 Luxembourg (LU)
(72) Erfinder: Donát, Václau, 51261 Prêpesê (CZ)
(74) Vertreter: Lelgemann, Karl-Heinz

(57) **Zusammenfassung**

Ein Plungermechanismus für eine zumindest eine Vorform aufweisende Glasformmaschine hat einen Plunger je Vorform und eine Antriebsvorrichtung (15) je Plunger, mittels der der Plunger in die ihm zugeordnete Vorform der Glasformmaschine hinein und aus dieser heraus bewegbar ist und die einen Servoelektromotor (16) aufweist, mittels dem die Antriebsenergie zur Verstellung des Plungers erzeugbar ist.

Um den Plungermechanismus in konstruktiv-technisch einfacher Weise zusammenzustellen, um diesen Plungermechanismus im Wesentlichen aus Standardbauteilen zusammenzustellen und um bei diesem Plungermechanismus die Übertragung und Umsetzung der Antriebsenergie auf den Plunger geschützt und unempfindlich gegen äußere Einflüsse stattfinden zu lassen, wird vorgeschlagen, dass jede Antriebsvorrichtung (15) ein Getriebe (17) aufweist, das abgangsseitig des Servoelektromotors (16) angeordnet ist, und dass abgangsseitig jedes Getriebes (17) ein Zahnrad (13) angeordnet ist, dessen Drehachse senkrecht zur Verstellrichtung des der Antriebsvorrichtung (15) zugeordneten Plungers verläuft und das mit einer Zahnstange in kämmendem Eingriff ist, die an einer Kolbenstange (7) des der Antriebsvorrichtung (15) zugeordneten Plungers angeordnet oder ausgebildet ist.

## Beschreibung

Die Erfindung bezieht sich auf einen Plungermechanismus für eine zumindest eine Vorform aufweisende Glasformmaschine, mit einem Plunger je Vorform, einer Antriebsvorrichtung je Plunger, mittels der der Plunger in die ihm zugeordnete Vorform der Glasformmaschine hinein und aus dieser heraus bewegbar ist und die einen Servoelektromotor aufweist, mittels dem die Antriebsenergie zur Verstellung des Plungers erzeugbar ist.

Aus dem Stand der Technik bekannt sind Plungermechanismen, die einen pneumatisch oder hydraulisch angetriebenen Plunger aufweisen. Um eine im Vergleich zur pneumatischen oder hydraulischen Antriebsvariante verbesserte Antriebsvariante zur Verfügung zu stellen, schlägt die US 6,079,226 einen Plungermechanismus vor, bei dem der Plunger des Plungermechanismus durch einen Servorelektromotor angetrieben wird. Die vom Servoelektromotor erzeugte und zur Verfügung gestellte Antriebsenergie wird bei diesem bekannten Plungermechanismus mittels einer Kugelgewindeschraube und einer Mutter in eine vertikale Bewegung der Kolbenstange des Plungermechanismus umgesetzt. Diese Kugelgewindeschraube ist in einem Gehäuse des Plungermechanismus eingelassen, wobei der Antriebsmotor um die Kugelgewindeschraube herum positioniert ist. Bei der Zusammenstellung dieses Plungermechanismus kommen entsprechend nur speziell ausgestaltete Servoelektromotoren und Kugelgewindeschrauben sowie Kugelspindeln zum Einsatz.

Ausgehend von dem vorstehend geschilderten Stand der Technik liegt der Erfindung die Aufgabe zugrunde, einen Plungermechanismus für eine zumindest eine Vorform aufweisende Glasformmaschine zur Verfügung zu stellen, der in konstruktivtechnisch einfacher Weise zusammenstellbar ist, der im Wesentlichen aus Standardbauteilen zusammenstellbar ist und bei dem die Übertragung und Umsetzung der Antriebsenergie auf den Plunger geschützt und unempfindlich gegen äußere Einflüsse stattfindet.

Diese Aufgabe wird erfindungsgemäß dadurch gelöst, dass bei dem Plungermechanismus für zumindest eine Vorform aufweisende Glasformmaschine jede Antriebsvorrichtung ein Getriebe aufweist, das abgangsseitig des Servorelektromotors angeordnet ist, und dass abgangsseitig jedes Getriebes ein Zahnrad angeordnet ist, dessen Drehachse senkrecht zur Verstellrichtung des der Antriebsvorrichtung zugeordneten Plungers verläuft und das mit einer Zahnstange in kämmendem Eingriff ist, die an einer Kolbenstange des der Antriebsvorrichtung zugeordneten Plungers angeordnet oder ausgebildet ist.

Durch die Umsetzung der Drehbewegung des Zahnrads in die vertikale Bewegung der Kolbenstange und des mit dieser verbundenen Plungers kann der Plunger in aufwärtiger und abwärtiger Richtung vertikal verstellt werden. Die zur Kraftübertragung dienende Kombination aus Zahnrad und Zahnstange ist unempfindlich gegen Schmutz oder Schmierung und ermöglicht eine einfache und schnelle Montage der Kolbenstange, sobald diese verschlissen ist.

Um eine zuverlässige Übertragung der zahnradseitigen Rotationsenergie in die lineare Vertikalbewegung der Kolbenstange bzw. des Plungers zu gewährleisten, ist es vorteilhaft, wenn das abgangsseitig jedes Getriebes angeordnete Zahnrad und die kolbenstangenseitige Zahnstange des der Antriebsvorrichtung bzw. dem Getriebe zugeordneten Plungers in einem ihnen gemeinsamen Rahmen angeordnet sind.

Gemäß einer vorteilhaften Weiterbildung des erfindungsgemäßen Plungermechanismus können als Servoelektromotoren übliche Standard-Servoelektromotoren vorgesehen sein. In Zusammenwirkung mit dem Getriebe der Antriebsvorrichtung sind derartige Standard-Servoelektromotoren ausreichend, um am Plunger die gewünschten Kräfte zur Verfügung zu stellen.

Um besonders hohe Pressdrücke am Plunger erreichbar zu machen, ist es zweckmäßig, wenn bei dem Plungermechanismus jedes Getriebe als Übersetzungsgetriebe ausgebildet ist, mittels dem das Zahnrad des Getriebes mit einem hohen Drehmoment beaufschlagbar ist.

Der erfindungsgemäße Plungermechanismus ist gemäß einer vorteilhaften Weiterbildung mit einem noch geringeren wirtschaftlichen und technisch-konstruktiven Aufwand realisierbar, wenn er modulartig aus jeweils einem Plunger, einem variablen Kassetteneinsatz, der den Plunger koaxial umgibt, einem Plungerzylinder, in dem der Plunger und der variable Kassetteneinsatz auf- und abwärts beweglich aufgenommen sind, einer Kolbenstange, die mit dem Plunger verbindbar und an der die Zahnstange ausgebildet ist, einem Zahnrad, einem Getriebe und einem Servoelektromotor zusammensetzbar ist. Durch diese modulartige Zusammensetzbarkeit des Plungermechanismus ist darüber hinaus gewährleistet, dass defekte Bauteile des Plungermechanismus mit einem im Vergleich zum Stand der Technik erheblich verringertem Aufwand austauschbar sind. Aufgrund der modularen Zusammensetzung des Plungermechanismus sind Adaptionen desselben an unterschiedliche Anforderungsprofile mit einem vergleichsweise geringen Aufwand möglich, wobei darüber hinaus die Anzahl der Bauteile des Plungermechanismus minimiert wird. Insbesondere an folgende Parameter eines Einsatzes ist eine schnelle Anpassung möglich: Die Hubhöhe des Plungers ist in einfacher Weise anpassbar und der Aufnahmedurchmesser für die variablen Kassetteneinsätze ist anpassbar.

Wenn der Abstand nebeneinander angeordneter Plunger des Plungermechanismus mittels Adapterplatten variierbar ist, kann der Abstand zwischen den Plungerzylindern beispielsweise mit einem geringen Aufwand von 4 ¼ Zoll auf 6 ¼ Zoll adaptiert werden.

Zweckmäßigerweise weist jeder Servoelektromotor einen Inkrementgeber auf, mittels dem während der gesamten Plungerhubbewegung die genaue Stellung des Plungers erfassbar ist.

Hierbei können gemäß einer Weiterbildung, bei der mittels des Inkrementgebers ein Pressdruck des Plungers erfassbar ist, simultan die anstehenden Kräfte gemessen werden.

Wenn der Inkrementgeber an eine Steuervorrichtung der Glasformmaschine angeschlossen ist, mittels der der Pressdruck des Plungers und/oder das Tropfengewicht eines in die dem Plunger zugeordnete Vorform eintretenden Glastropfens beeinflussbar sind bzw. ist, kann im Betrieb des erfindungsgemäßen Plungermechanismus mit gleichbleibender Kraft oder mit mehr oder weniger Kraft gepresst werden.

Darüber hinaus kann dann die Steuervorrichtung die Plungerbewegung online in Abhängigkeit von der Zeit messen, wobei die hierdurch gewonnenen Informationen weiter verwendet werden können; die Bewegung des Plungers kann insbesondere beim Press-Blas- und beim Enghals-Press-Blas-Prozess gesteuert und überwacht werden.

Da aufgrund der Erfassung der oberen Endstellung des Plungers beim Herstellungsprozess ermittelt werden kann, wieviel Glas in der Vorform sich befindet, kann in der Steuervorrichtung der Glasformmaschine dieser Parameter dazu verwendet werden, um das Glas- bzw. Tropfengewicht des in der Vorform befindlichen Glastropfens zu ermitteln. Aufgrund des so gewonnenen Messwerts kann das Glasgewicht eines der betreffenden Vorform zuzuleitenden Glastropfens entsprechend erhöht oder reduziert werden.

Gemäß einer weiteren vorteilhaften Ausführungsform des erfindungsgemäßen Plungermechanismus ist die Zahnstange in bzw. an der Kolbenstange ausgebildet. Aufgrund der integrierten bzw. einstückigen Ausgestaltung zwischen Zahnstange und Kolbenstange lässt sich eine hohe mechanische Festigkeit erzielen, wodurch hohe Standzeiten der Kolbenstange erreicht werden können.

Im Folgenden wird die Erfindung anhand einer Ausführungsform unter Bezugnahme auf die Zeichnung näher erläutert.

Es zeigen:
- Figur 1: eine Ausführungsform eines erfindungsgemäßen Plungermechanismus in einer perspektivischen Darstellung;
- Figur 2: die in Figur 1 gezeigte Ausführungsform des erfindungsgemäßen Plungermechanismus in einer ersten Vertikalschnittdarstellung;
- Figur 3: die in den Figuren 1 und 2 gezeigte Ausführungsform des erfindungsgemäßen Plungermechanismus in einer Horizontalschnittdarstellung; und
- Figur 4: die in den Figuren 1 bis 3 gezeigte Ausführungsform des erfindungsgemäßen Plungermechanismus in einer weiteren Vertikalschnittdarstellung.

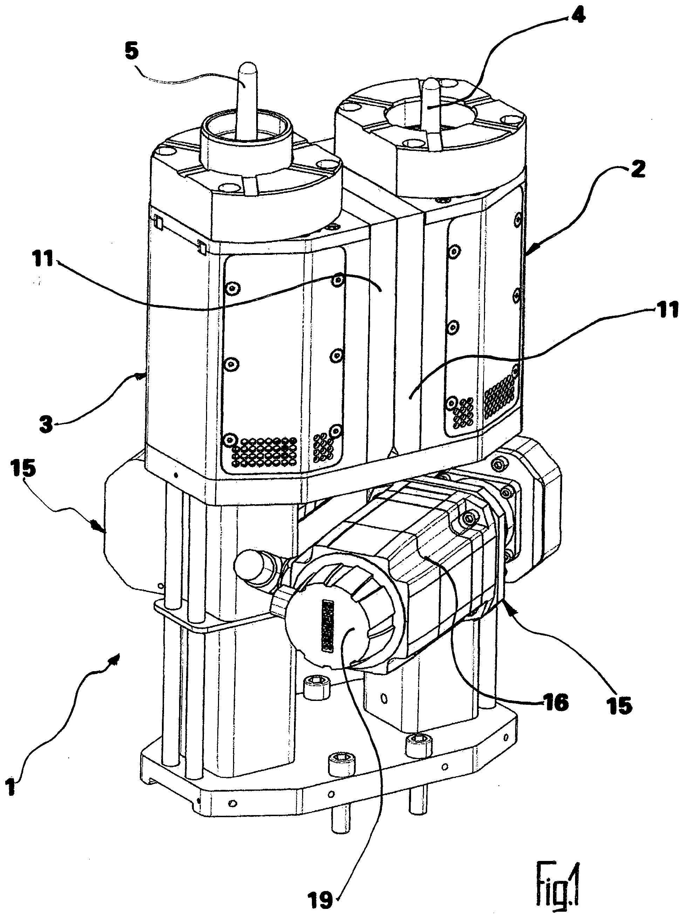

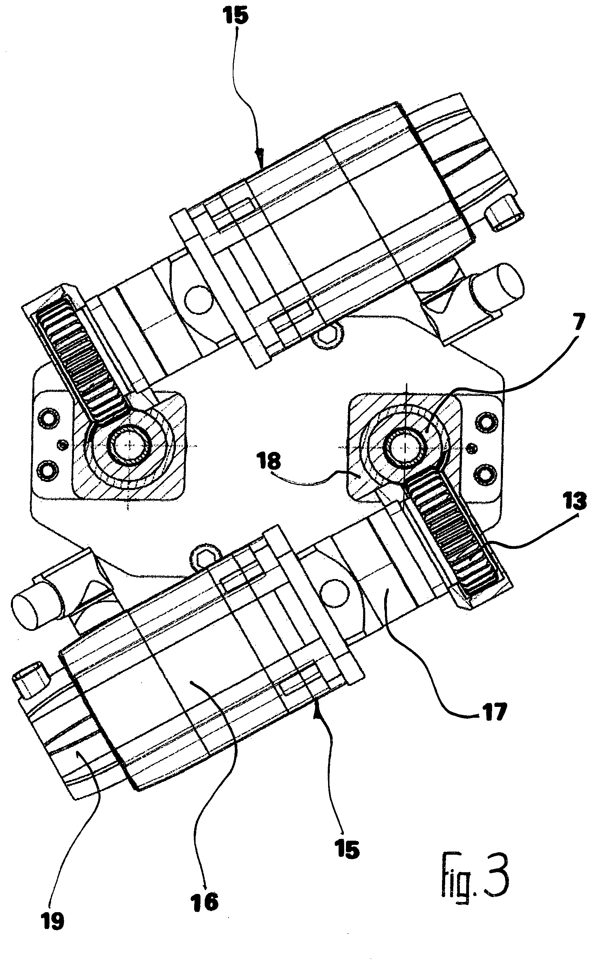

Ein in den Figuren 1 bis 4 anhand einer Ausführungsform dargestellter Plungermechanismus ist Bestandteil einer im Übrigen nicht dargestellten Glasformmaschine bzw. Behälterglasmaschine, insbesondere einer sog. IS-Glasmaschine.

Bei derartigen Glasmaschinen werden Glastropfen einzelnen Stationen der jeweiligen Glasmaschine zugeführt, wobei die Glastropfen in in den Figuren nicht dargestellten Vorformen der Glasmaschine eingeführt werden. Die in den Figuren 1 bis 4 gezeigte Ausführungsform des Plungermechanismus 1 ist zwei nicht dargestellten Vorformen der Glasmaschine zugeordnet.

Grundsätzlich ist es möglich, einen entsprechenden Plungermechanismus 1 für z.B. 1 bis 5 Vorformen auszugestalten.

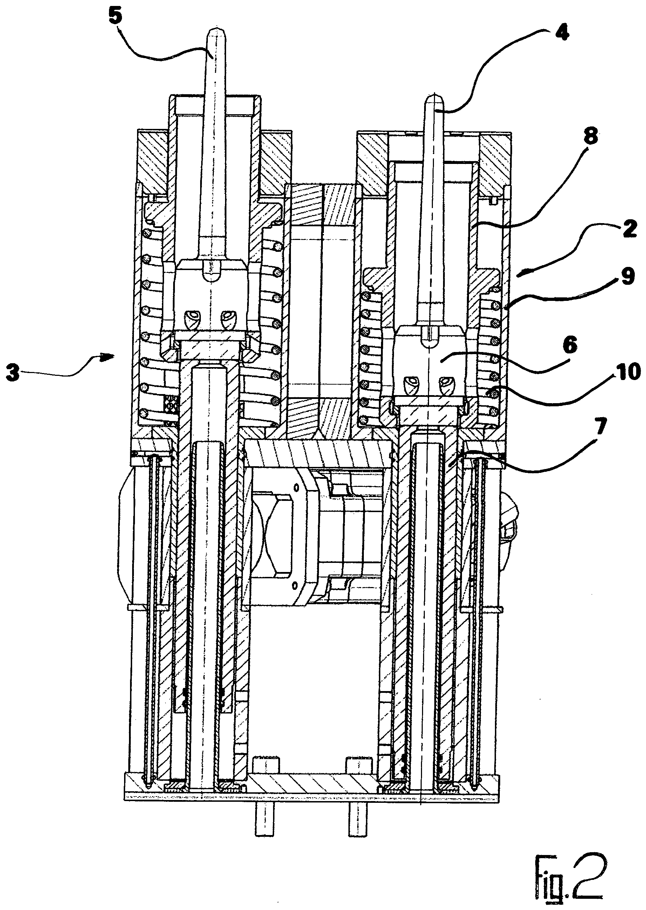

Bei der in den Figuren 1 bis 4 gezeigten Ausführungsform hat der Plungermechanismus 1 zwei nebeneinander angeordnete Plungereinheiten 2, 3, wobei jede Plungereinheit einer der beiden in den Figuren nicht dargestellten Vorformen zugeordnet ist. Die beiden Plungereinheiten 2, 3 sind gleich bzw. analog zueinander aufgebaut, so dass im Folgenden lediglich die in den Figuren 1 und 2 rechts dargestellte Plungereinheit 2 im Einzelnen beschrieben werden wird.

Bei dem in den Figuren 1 und 2 gezeigten Plungermechanismus 1 befindet sich die in den Figuren 1 und 2 rechte Plungereinheit 2 in einer Position, in der ein Plunger 4 dieser Plungereinheit 2 sich in seiner unteren Endstellung befindet; ein Plunger 5 der in den Figuren 1 und 2 linken Plungereinheit 3 befindet sich in seiner oberen Endstellung.

Der Plunger 4 der in den Figuren 1 und 2 rechts gezeigten Plungereinheit 2 ist entsprechend in eine in die nicht dargestellte Vorform vorstehende und eine aus der nicht dargestellten Vorform zurückgezogene Stellung verbringbar. Mittels des Plungers 4 wird bei in der Vorform befindlichem Glastropfen eine Höhlung in diesen Glastropfen gepresst, wenn der Plunger 4 aus seiner unteren Endstellung in seine obere Endstellung verstellt wird.

Die in den Glastropfen eingebrachte Höhlung wird anschließend in einer Fertigform der Glasmaschine, in die der Glastropfen verbracht wird, dazu benutzt, um mit Hilfe von Druckluft das mit der Höhlung versehene Külbel aufzublasen und dann den zu fertigenden Glasbehälter komplett fertig zu formen.

Der Plunger 4, der mit seinem distalen Ende in den in der Vorform befindlichen Glastropfen zwecks Ausgestaltung der Höhlung eindringt, ist an seinem proximalen Ende mittels eines Übergangsteils 6 mit einer Kolbenstange 7 der Plungereinheit 2 in einer festen, aber lösbaren Verbindung. Beispielsweise kann der Plunger 4 mittels einer Gewindeverbindung mit dem Übergangsteil 6, das seinerseits fest mit der Kolbenstange 7 verbunden ist, verbunden sein. Das Übergangsteil 6 sitzt in einem Kassetteneinsatz 8, der wiederum in einem Plungerzylinder 9 aufgenommen ist. Der Plunger 4, das Übergangsteil 6, die Kolbenstange 7, der Kassetteneinsatz 8 und der Plungerzylinder 9 der Plungereinheit 2 sind koaxial zueinander angeordnet.

Zwischen der Außenmantelfläche des Kassetteneinsatzes 8 und der Innenmantelfläche des Plungerzylinders 9 sitzt eine Schraubenfeder 10, die sich an ihrem unteren Ende an einem radial einwärts vorstehenden Vorsprung des Plungerzylinders 9 und an ihrem oberen Ende an einem radial auswärts stehenden Vorsprung des Kassetteneinsatzes 8 abstützt und mittels der der Kassetteneinsatz 8 und damit das Übergangsteil 6 bzw. der Plunger 4 in die obere Endstellung vorgespannt ist.

Zwischen den beiden Plungereinheiten 2, 3, wie sie in den Figuren 1 und 2 gezeigt sind, sind in der dargestellten Ausführungsform des Plungermechanismus 1 zwei Adapterplatten 11 angeordnet. Mittels der Adapterplatten 11 bzw. der entsprechenden Anzahl der Adapterplatten 11 kann der Abstand zwischen den beiden Plungereinheiten 2, 3 des Plungermechanismus 1 in Entsprechung an den Abstand der in den Figuren nicht dargestellten Vorformen angepasst werden. Entsprechend kann der Plungermechanismus 1 für mit unterschiedlichem Abstand zueinander angeordnete Vorformen eingesetzt werden.

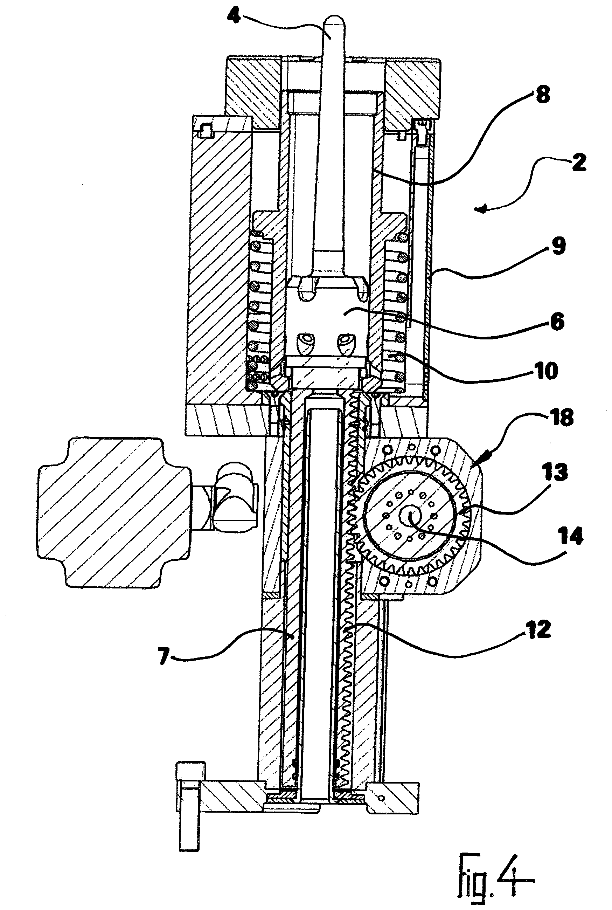

Zur Verstellung des Plungers 4 in auf- und abwärtiger Richtung in Bezug auf den Plungerzylinder 9 weist die Kolbenstange 7 der in den Figuren 1 und 2 rechten Plungereinheit 2 eine Zahnstange 12 auf, die bei der dargestellten Ausführungsform des Plungermechanismus 1 einstückig in bzw. an der Kolbenstange 7 ausgebildet ist, wie dies am besten aus Figur 4 hervorgeht. Die Zahnstange 12 erstreckt sich parallel zur Bewegungsrichtung des Plungers 4.

In kämmendem Eingriff mit der Zahnstange 12 der Kolbenstange 7 ist ein dem Antrieb der Kolbenstange 7 und damit des Plungers 4 dienendes Zahnrad 13. Eine Drehachse 14 des Zahnrads 13 ist senkrecht zur Verstellrichtung des Plungers 4 und damit zur in der Kolbenstange 7 integrierten Zahnstange 12 angeordnet, wie dies am besten aus der Schnittdarstellung in Figur 4 hervorgeht. Das Zahnrad 13 bildet das ausgangsseitige Antriebsglied einer Antriebsvorrichtung 15, die der in den Figuren 1 und 2 rechts dargestellten Plungereinheit 2 zugeordnet ist. Zu dieser Antriebsvorrichtung 15 gehört ein Servoelektromotor 16, bei dem es sich um einen standardisierten üblichen Servoelektromotor handeln kann. Zwischen dem Servorelektromotor 16 der Antriebsvorrichtung 15 andererseits und dem die Ausgangsseitige der Antriebsvorrichtung 15 bildenden Zahnrad 13 andererseits ist ein Getriebe 17 angeordnet, das als Übersetzungsgetriebe ausgebildet sein kann und mittels dem das Zahnrad 13 mit einem vergleichsweise hohen Drehmoment beaufschlagt werden kann.

Wie sich am besten aus Figur 4 ergibt, sind das das Ausgangsglied der Antriebsvorrichtung 15 bildende Zahnrad 13 und die mit der Zahnstange 12 versehene Kolbenstange 7 der Plungereinheit 2 in einem ihnen gemeinsamen Rahmen 18 gehaltert, so dass die am Zahnrad 13 zur Verfügung stehende Antriebsenergie zuverlässig und exakt auf die Kolbenstange 7 und damit den Plunger 4 der Plungereinheit 2 übertragen werden kann.

In der dargestellten Ausführungsform ist der Servoelektromotor 16 an seiner dem Getriebe 17 abgewandten Stirnfläche mit einem Inkrementgeber 19 ausgerüstet, mittels dem die Bewegung des Plungers 4 der in den Figuren 1 und 2 rechten Plungereinheit 2 über dessen gesamten Bewegungshub zwischen zwei Ankünften in seiner unteren Endstellung exakt erfassbar ist. In der dargestellten Ausführungsform ist der Plungermechanismus 1 modulartig zusammengestellt, z.B., wie in der gezeigten Ausführungsform, aus den beiden Plungereinheiten 2, 3, die ihrerseits wiederum modulartig zusammengestellt sind, z.B. im Falle der Plungereinheit 2, die in den Figuren 1 und 2 rechts dargestellt ist, aus dem Plunger 4, dem variablen Kassetteneinsatz 8, der den Plunger 4 koaxial umgibt, dem Plungerzylinder 9, in dem der Plunger 4 und der variable Kassetteneinsatz 8 auf- und abwärts beweglich aufgenommen sind, der Kolbenstange 7, die mit dem Plunger 4 verbindbar und an der die Zahnstange 12 ausgebildet ist, dem Zahnrad 13 der Antriebsvorrichtung 15, deren Getriebe 17 und deren Servoelektromotor 16.

Mittels der Adapterplatte 11 bzw. mittels Adapterplatten 11 kann der Abstand zwischen den einzelnen Plungerzylindern 9 in einfacher Weise variiert werden, z.B. von 4 ¼ Zoll auf 6 ¼ Zoll. Mittels des Inkrementgebers 19, mittels dem während der gesamten Plungerbewegung zwischen zwei unteren Endstellungen des Plungers 4 die genaue Stellung des Plungers 4 erfassbar ist, sind auch die auf den Plunger 4 einwirkenden Kräfte bzw. der Pressdruck des Plungers 4 mess- bzw. erfassbar. Diese Werte können vom Inkrementgeber 19 an eine in den Figuren nicht dargestellte Steuervorrichtung der Glasformmaschine weitergeleitet werden. Mittels dieser Steuervorrichtung kann dann der Pressdruck des Plungers 4 über entsprechende Beeinflussung der Antriebsvorrichtung 15, die der diesen Plunger 4 aufweisenden Plungereinheit 2 zugeordnet ist, beeinflusst werden. Durch eine entsprechende Beeinflussung der zeitlichen Steuerung einer in den Figuren nicht dargestellten Tropfenschere der Glasformmaschine oder der Höhenverstellung an einem Tonrohr einer Speiservorrichtung oder von speiservorrichtungsseitigen Plungern kann alternativ oder zusätzlich das Tropfengewicht eines Glastropfens variiert werden, der in diejenige Vorform eingeleitet wird, die dem Plunger 4 zugeordnet ist.

Aufgrund der modularen Zusammensetzung des Plungermechanismus 1 als Ganzem und der diesen Plungermechanismus 1 bildenden Plungereinheiten 2, 3 sowie der diesen zugeordneten Antriebsvorrichtungen 15 kann der Plungermechanismus 1 als Ganzes mit einem äußerst geringen Aufwand an unterschiedliche konkrete Produktionsanforderungen angepasst werden.

Zur Ausgestaltung des Plungermechanismus 1 können standadisierte Modulbauteile, insbesondere Standard-Servoelektromotoren verwendet werden.

## Patentansprüche

1. Plungermechanismus für eine zumindest eine Vorform aufweisende Glasformmaschine, mit einem Plunger (4, 5) je Vorform, einer Antriebsvorrichtung (15) je Plunger (4, 5), mittels der der Plunger (4, 5) in die ihm zugeordnete Vorform der Glasformmaschine hinein und aus dieser heraus bewegbar ist und die einen Servoelektromotor (16) aufweist, mittels dem die Antriebsenergie zur Verstellung des Plungers (4, 5) erzeugbar ist, **dadurch gekennzeichnet, dass** jede Antriebsvorrichtung (15) ein Getriebe (17) aufweist, das abgangsseitig des Servoelektromotors (16) angeordnet ist, und dass abgangsseitig jedes Getriebes (17) ein Zahnrad (13) angeordnet ist, dessen Drehachse (14) senkrecht zur Verstellrichtung des der Antriebsvorrichtung (15) zugeordneten Plungers (4, 5) verläuft und das mit einer Zahnstange (12) in kämmendem Eingriff ist, die an einer Kolbenstange (7) des der Antriebsvorrichtung (15) zugeordneten Plungers (4, 5) angeordnet oder ausgebildet ist.

2. Plungermechanismus nach Anspruch 1, bei dem das abgangsseitig jedes Getriebes (17) angeordnete Zahnrad (13) und die kolbenstangenseitige Zahnstange (12) des der Antriebsvorrichtung (15) bzw. dem Getriebe (17) zugeordneten Plungers (4, 5) in einem ihnen gemeinsamen Rahmen (18) angeordnet sind.

3. Plungermechanismus nach Anspruch 1 oder 2, bei dem als Servoelektromotoren (16) übliche Standard-Servoelektromotoren vorgesehen sind.

4. Plungermechanismus nach einem der Ansprüche 1 bis 3, bei dem jedes Getriebe (17) als Übersetzungsgetriebe ausgebildet ist, mittels dem das Zahnrad (13) des Getriebes (17) mit einem hohen Drehmoment beaufschlagbar ist.

5. Plungermechanismus nach einem der Ansprüche 1 bis 4, der modulartig aus jeweils einem Plunger (4, 5), einem variablen Kassetteneinsatz (8), der den Plunger (4, 5) koaxial umgibt, einem Plungerzylinder (9), in dem der Plunger (4, 5) und der variable Kassetteneinsatz (8) auf- und abwärts beweglich aufgenommen sind, einer Kolbenstange (7), die mit dem Plunger (4, 5) verbindbar und an der die Zahnstange (12) ausgebildet ist, einem Zahnrad (13), einem Getriebe (17) und einem Servoelektromotor (16) zusammensetzbar ist.

6. Plungermechanismus nach einem der Ansprüche 1 bis 5, bei dem der Abstand nebeneinander angeordneter Plunger (4, 5) des Plungermechanismus mittels Adapterplatten (11) variierbar ist.

7. Plungermechanismus nach einem der Ansprüche 1 bis 6, bei dem jeder Servoelektromotor (16) einen Inkrementgeber (19) aufweist, mittels dem während der gesamten Plungerhubbewegung die genaue Stellung des Plungers (4, 5) erfassbar ist.

8. Plungermechanismus nach Anspruch 7, bei dem mittels des Inkrementgebers (19) ein Pressdruck des Plungers (4, 5) erfassbar ist.

9. Plungermechanismus nach Anspruch 8, bei der der Inkrementgeber (19) an eine Steuervorrichtung der Glasformmaschine angeschlossen ist, mittels der der Pressdruck des Plungers (4, 5) und/oder das Tropfengewicht eines in die dem Plunger (4, 5) zugeordnete Vorform eintretenden Glastropfens beeinflussbar sind bzw. ist.

10. Plungermechanismus nach einem der Ansprüche 1 bis 9, bei dem die Zahnstange (12) in bzw. an der Kolbenstange (7) ausgebildet ist.
